# EUROPEAN PATENT SPECIFICATION

(11) **EP 3 246 782 B1**
(45) Date of publication and mention of the grant of the patent: **24.02.2021**
(21) Application number: 16170261.8
(22) Date of filing: 19.05.2016
(51) Int. Cl.: G05D 23/19, F24D 19/10

(54) **CONTROL MEANS FOR A VALVE ARRANGEMENT, VALVE ARRANGEMENT, AND METHOD FOR MONITORING TEMPERATURES WITH A CONTROL MEANS FOR A VALVE ARRANGEMENT**
STEUERVORRICHTUNG FÜR EINE VENTILANORDNUNG, VENTILANORDNUNG UND VERFAHREN ZUR TEMPERATURÜBERWACHUNG MIT EINER STEUERVORRICHTUNG FÜR EINE VENTILANORDNUNG
MOYENS DE COMMANDE POUR UN AGENCEMENT DE SOUPAPE, AGENCEMENT DE SOUPAPE ET PROCÉDÉ PERMETTANT DE SURVEILLER LES TEMPÉRATURES AVEC UN MOYEN DE COMMANDE POUR UN AGENCEMENT DE SOUPAPE

(43) Date of publication of application: 22.11.2017
(73) Proprietor: Danfoss A/S, 6430 Nordborg (DK)
(72) Inventor: Nielsen, Peter Gammeljord, 7100 Vejle (DK); Jensen, Jes Vestervang, 7361 Ejstrupholm (DK)
(74) Representative: Keil & Schaafhausen Patentanwälte PartGmbB

(56) References cited:
- EP-A2- 1 235 131
- EP-A2- 2 466 413
- WO-A1-2015/028552
- DE-A1- 3 521 188
- GB-A- 2 452 043

## Description

The present invention relates to a control means for a valve arrangement, the control means comprising a valve coupling zone, a first temperature sensor having a first distance with respect to the valve coupling zone, and a second temperature sensor having a second distance with respect to the valve coupling zone, the second distance being different from the first distance.

Furthermore, the present invention relates to the valve arrangement with the control means.

In addition, the invention relates to a method for monitoring temperatures with the control means for the valve arrangement, the valve arrangement comprising a valve for a heater radiator, the method comprising the steps of measuring a first temperature with the first temperature sensor of the control means, the first temperature sensor having the first distance with respect to the valve coupling zone of the control means, and measuring a second temperature with the second temperature sensor of the control means, the second temperature sensor having the second distance with respect to the valve coupling zone, the second distance being different from the first distance and a third temperature sensor, the third temperature sensor having a third distance with respect to the valve coupling zone, the third distance being different from the first distance and from the second distance, wherein the third temperature sensor is arranged to measure an intermediate temperature.

Control means, valve arrangements, and methods as described in the outset are for example known from US 8 944 099, EP 2 466 413 A2 and GB 2 452 043. Specifically, it is known to estimate a room temperature on the basis of the first temperature and the second temperature and to detect a closing condition for the valve arrangement using the first temperature and the second temperature.

However, it has been found that the temperature estimates lack accuracy. This is as the first temperature sensor may be influenced, for example, by radiant heat of a radiator and the second temperature sensor may be influenced by an ambient temperature.

WO 2015/028552 A1 describes a method for temperature control in which temperature data are obtained by receiving temperature data from a plurality of temperature sensors. The temperature data includes first temperature data from a first temperature sensor and auxiliary temperature data from an auxiliary temperature sensor arranged remote from the first temperature sensor. The temperature data from different heat sources can be combined in order to calculate a first temperature set point of a controller of a heat source.

Thus, it is the objective of the invention to provide an accurate temperature estimate.

The objective is solved by a control means as described in the outset which in addition comprises a third temperature sensor, the third temperature sensor having a third distance with respect to the valve coupling zone, the third distance being different from the first distance and from the second distance.

The third temperature sensor allows to measure the third temperature as a further reference value which allows to more accurately calculate a temperature estimate for both, the ambient temperature and a fluid temperature.

The third temperature sensor is arranged to measure an intermediate temperature. The intermediate temperature is preferably a temperature of the control means, preferably a housing temperature. The third temperature sensor is preferably arranged to provide an indication of a temperature offset of the first temperature sensor and/or the second temperature sensor. As the third temperature sensor may be subject to radiant heat of the liquid in the valve arrangement and/or the heater radiator, it is preferred that the second temperature is used in a compensation calculation on the third temperature in order to calculate an accurate estimate of the third temperature.

Preferably, the third temperature sensor is arranged in between the first temperature sensor and the second temperature sensor. This arrangement allows to measure the intermediate temperature in a preferred way. In some embodiments, the first temperature sensor may be influenced by the fluid temperature, thus giving an overestimated ambient temperature. In some embodiments, the second temperature sensor may be influenced by the ambient temperature, thus giving an underestimated liquid temperature. The first and/or the third temperature may be used to compensate the underestimation of the second temperature. The second temperature and/or the third temperature may be used to compensate the overestimation of the first temperature. Therefore, when the third temperature sensor is arranged in between, the third temperature may advantageously be used to compensate undesired influences on both, the first temperature and the second temperature.

Preferably, the third temperature sensor is arranged equidistant from the first temperature sensor and the second temperature sensor. In addition or in the alternative, the third temperature sensor is arranged equidistant from a first end of the control means distant from the valve coupling zone and from a second end of the control means adjacent to the valve coupling zone. The first end and the second end are preferably arranged on a rotational axis of a handle of the control means. Equidistance may advantageously lead to an easier way of using the third temperature for compensating unwanted influences on both the first temperature and the second temperature. However, in some embodiments, the third temperature sensor is offset from the equidistance towards the first temperature sensor or towards the second temperature sensor. This may be necessary due to design reasons and may still lead to a good estimation of ambient temperature and/or liquid temperature.

In a preferred embodiment of the invention, the third temperature sensor is arranged on a support element. This allows good fixation of the temperature sensor to the control means. The support element is preferably arranged at a radial side of the control means, preferably next to a radially circumferential surface of the control means. This allows easy fixation of the support element.

It is preferred that the support element is a PCB of the control means. Thus, the PCB may serve as a support element for the third temperature sensor.

It is preferred that the support element is a PCB of a display of the control means. When a display, for example displaying the first temperature, the second temperature and/or the third temperature, is envisaged, a PCB for connecting the display may be necessary anyway. Thus, the PCB may serve as both, support element for the display and support element for the third temperature sensor. It is preferred that the display is arranged in a side wall radially surrounding the rotational axis of the handle of the control means. This allows good viewability of the display and may keep the third temperature sensor distant from the valve coupling zone.

In a preferred embodiment, the first temperature sensor is arranged distant from the valve coupling zone in an opening of the control means and/or offset from the rotational axis of the handle of the control means. Preferably, the first temperature sensor is arranged distant from the valve coupling zone in an opening of the control means. This may allow good air circulation around the first temperature sensor. Therefore, the first temperature sensor may be adapted to mainly measure an air temperature. The opening may at least partially be shielded from radiator heat radiation by a heat shield. The heat shield is preferably a front heat shield on the first end of the control means. Preferably, the front heat shield is a plate on the front end of the rotatable handle and/or facing away from the valve coupling zone. The opening may be a light channel which is lit by a light source when a wireless data connection is established with the control means. It is preferred that the first temperature sensor is arranged offset from the rotational axis of the handle of the control means. Preferably, the first temperature sensor is placed radially outward from the rotational axis of the handle and/or close to the side wall. Preferably, a radial distance between the side wall and the first temperature sensor is smaller than a radial distance between the rotational axis and the first temperature sensor. This may be helpful in order to get accurate estimates of the ambient temperature and/or the liquid temperature when the control means is mounted to the valve arrangement.

It is preferred that the first temperature sensor is arranged at an end of the control means being distant from the valve coupling zone. This allows to have little undesired influence originating from the valve coupling zone which heats up once it is in contact with the valve arrangement in which the fluid is located. The first temperature sensor may be arranged covered or partially covered by the heat shield. However, the first temperature sensor may be integrated into the heat shield or placed on the heat shield and facing away from the valve coupling zone. Thus, a good shielding against the unwanted influences of radiator heat and/or fluid heat becomes possible.

Preferably, the second temperature sensor is arranged at a control means socket and/or in a cavity of the bottom of the control means. This allows good temperature estimation of the liquid temperature, the liquid being located in the valve arrangement comprising a valve, once the control means socket is attached to the valve arrangement. However, it should be understood that while preferably the control means is releasably attachable to the valve arrangement, in some embodiments the valve arrangement and the control means form an integrated part. Thus, the control means according to the invention may be a separate part for use with the valve arrangement or may form an integral part with the valve arrangement. Preferably, the valve coupling zone forms a cavity. Preferably, the second temperature sensor is mounted in contact with an inner wall of the cavity. This allows good heat transfer from the valve coupling zone to the second temperature sensor.

It is preferred that the control means comprises a processing unit being adapted to perform a calculation on the basis of measured temperature data obtained by two or more of the first temperature sensor, the second temperature sensor and the third temperature sensor, at least one the measured temperature data being obtained by the third temperature sensor, the calculation preferably resulting in one or more of the elements of the group consisting of the temperature difference, a temperature gradient change and a temperature response time difference. Preferably, the processing unit performs the calculation on the basis of at least the first temperature and the third temperature. For example, the processing unit preferably calculates a temperature difference, a temperature gradient change and/or a temperature response time difference between the first temperature sensor and the third temperature sensor. In other embodiments of the invention, the processing unit is adapted to calculate the temperature difference, the temperature gradient change and the temperature response time difference on the basis of the second temperature and the third temperature. In these embodiments, it is possible to detect a temperature increase in the valve arrangement with good precision when the control means is attached to the valve arrangement. Preferably, the processing unit is adapted to extrapolate a valve temperature or a fluid temperature of the fluid located in the valve by extrapolating between the second temperature r and the third temperature. On the other hand, it is preferred that the processing unit is adapted to estimate the ambient temperature by extrapolating between the first temperature and the third temperature. Furthermore, it is preferred that the processing unit is adapted to perform the calculation on the basis of the first temperature, the second temperature and the third temperature in order to estimate the ambient temperature and/or the fluid temperature. When the processing unit is adapted to compare the second temperature to the third temperature, by looking at the temperature difference, the gradient change and/or the response time difference, it becomes possible to detect a temperature increase due to hot liquid flowing into the valve arrangement with good precision.

It is preferred that the control means is a thermostat head. Thermostat heads are widely known and applied as control means for valve arrangements. For controlling the valve arrangement, the control means, preferably the thermostat head, may comprise an actuator for actuating the valve, gear works or a temperature dependent bellows for driving the actuator. The handle may serve for presetting a target temperature, preferably.

The object of the invention is further solved by the valve arrangement with the control means. This allows for good estimation of the ambient temperature and/or fluid temperature.

Furthermore, the object is solved by the method for monitoring temperatures as described in the outset which additionally comprises the step of measuring the third temperature with the third temperature sensor of the control means, the third temperature sensor having the third distance with respect to the valve coupling zone, the third distance being different from the first distance and from the second distance.

Preferably, the method comprises the step of performing at least one calculation on the basis of the third temperature and at least one of the first temperature and the second temperature. The advantages of this step were explained above in more detail in view of the proposed control means. For example, a good estimate of the ambient temperature may be given by extrapolating between the first temperature and the third temperature. Preferable, a good estimation of the valve temperature, or fluid temperature, may be given by extrapolating between the second temperature and the third temperature. However, for some calculations it may be useful to use the first temperature, the second temperature and the third temperature.

It is preferred that the method comprises the steps of estimating the ambient temperature of the valve arrangement by performing the calculation on the basis of the first temperature and the third temperature, the first temperature sensor being arranged distant from the valve coupling zone of the control means and the third temperature sensor being arranged to detect an intermediate temperature of the control means and/or estimating the fluid temperature of the fluid located inside the valve arrangement by performing the calculation on the basis of the second temperature and the third temperature, the second temperature sensor being arranged adjacent to the valve coupling zone of the control means and the third temperature sensor being arranged to detect the intermediate temperature of the control means. Furthermore, the method may comprise calculating at least one of the elements of the group consisting of the temperature difference, the temperature gradient change and the temperature response time difference. For example, the processing unit may be adapted to calculate the temperature difference, the temperature gradient change and/or the temperature response time difference between the second temperature sensor and the third temperature sensor. However, in some embodiments, the processing unit may be adapted to additionally or in the alternative calculate at least one of the temperature difference, the temperature gradient change and/or the temperature response time difference between the first temperature sensor and the third temperature sensor. Furthermore, in some embodiments it is envisaged to have the processing unit calculate an extrapolation between the first temperature and the third temperature. In some embodiments the processing unit calculates an extrapolation between the second temperature and the third temperature. This may help to come to an accurate estimate for the liquid temperature and the ambient temperature, respectively

The following examples/aspects/embodiments are not according to the invention and are present for illustration purposes only. The invention as such is set forth in the claims.

In the following, exemplary embodiments of the invention are described with reference to the attached figures, in which:
- Fig. 1: shows a perspective view of a cross section through a control means according to a first embodiment of the invention;
- Fig. 2: shows a cross section of the first embodiment; and
- Fig. 3: shows a perspective view of a cross section of a second embodiment of the invention.

Reference signs were introduced in the following detailed description and the attached patent claims in order to improve readability. The reference signs are in no way meant to be limiting.

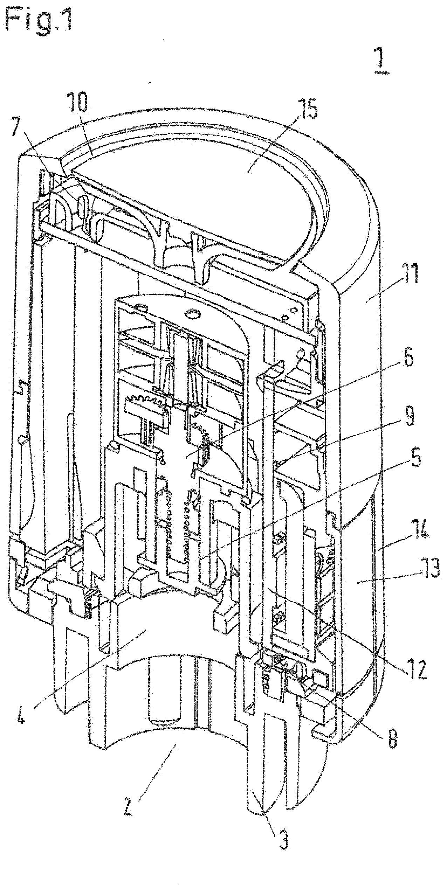

Fig. 1 shows a control means 1 for a valve arrangement (not shown) according to a first embodiment of the invention. The control means 1 comprises a valve coupling zone 2. The valve coupling valve 2 is designed as a control means socket adapted to couple the control means 1 to the valve arrangement. The valve coupling zone 2 comprises an inner wall 3 which forms a cavity 4. The cavity 4 is adapted to house a valve housing of the valve arrangement. An actuator 5 driven by a gear work 6 is adapted to actuate a valve element in the valve housing.

Furthermore, the control means 1 comprises a first temperature sensor 7 having a first distance with respect to the valve coupling zone 2 and a second temperature sensor 8 having a second distance with respect to the valve coupling zone 2, the second distance being different from the first distance. In this embodiment, the first distance is larger than the second distance.

According to the invention, the control means 1 comprises a third temperature sensor 9, the third temperature sensor 9 having a third distance with respect to the valve coupling zone 2, the third distance being different from the first distance and from the second distance. As will be described in the following, this allows to come to an accurate estimate of an ambient temperature and a valve temperature/fluid temperature of a fluid located in the valve arrangement.

As can be seen, the third temperature sensor 9 is arranged to measure an intermediate temperature compared to the first temperature sensor 7 and the second temperature sensor 8. As the first temperature sensor 7 is arranged distant from the valve coupling zone 2 in an opening 10 of the control means, in this case a light channel, and offset from a rotational axis of a handle 11 of the control means 1, the first temperature sensor 7 will mainly measure an ambient air temperature. As the second temperature sensor 8 is arranged at the control means socket of the control means 1, it will mainly measure a valve temperature or liquid temperature. Therefore, the third temperature sensor 9 being arranged in between the first temperature sensor 7 and the second temperature sensor 8 will measure the intermediate temperature.

More specifically, the third temperature sensor 9 is arranged equidistant from the first temperature sensor 7 and the second temperature sensor 8. To allow an easy fixing of the third temperature sensor 9 to the control means 1, a support element 12 is provided next to a side wall of the control means 1 radially surrounding a rotational axis of the handle 11. The support element 12 also is a PCB of a display 14 of the control means 1.

The PCB furthermore comprises a processing unit (not shown) being adapted to perform a calculation on the basis of measured temperature data obtained by two or more of the first temperature sensor 7, the second temperature sensor 8 and the third temperature sensor 9, at least one of the measured temperature data being obtained by the third temperature sensor 9, the calculation resulting in one or more of the elements of the group consisting of a temperature difference, a temperature gradient change and a temperature response time difference. More specifically, the processing unit is adapted to calculate all of the previously named elements of the group from the first temperature measured by the first temperature sensor 7 and the third temperature measured by the third temperature sensor 9. In addition, the processing unit is adapted to calculate the elements from the group on the basis of the measured temperature data obtained by the second temperature sensor 8 and the third temperature sensor 9, thus the second temperature and the third temperature. The processing unit is adapted to extrapolate between the first temperature and the third temperature in order to give an estimate for the ambient temperature. The processing unit is furthermore adapted to extrapolate between the second temperature and the third temperature in order to give an estimate for the valve temperature or fluid temperature.

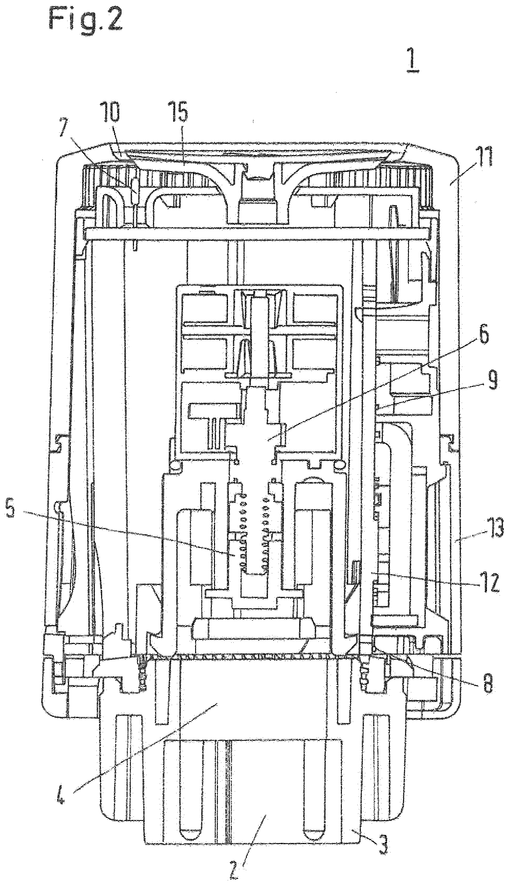

Fig. 2 shows the control means 1 according to the first embodiment in a cross section. The first temperature sensor 7 in the opening 10 is actually covered by a plastic shield 15. This helps in shielding the first temperature sensor 7 from mechanical influence and heater radiator or sun light heat.

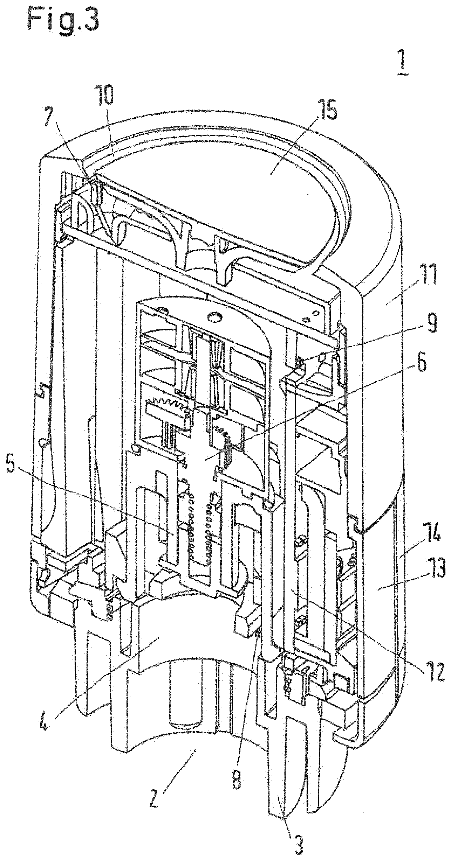

Fig. 3 shows a second embodiment of the control means 1 according to the invention. Most of the features are identical to those discussed in view of Fig. 1 and 2. However, it should be noted that in this embodiment, the first temperature sensor 7, the second temperature sensor 8 and the third temperature sensor 9 are located in slightly different positions. The front temperature sensor 7 which is still arranged at an end of the control means 1 being distant from the valve coupling zone 2 is now shifted more towards a gap between the handle 11 and the shield 15. It is therefore directly arranged below the gap. This may improve air circulation around the first temperature sensor 7. The distance between the third temperature sensor 9 and the first temperature sensor 7 is smaller than the distance between the second temperature sensor 8 and the third temperature sensor 9. This may reduce unwanted influence on the third temperature sensor 9 from the fluid flowing through the valve arrangement and thus heating up the valve coupling zone 2. Lastly, the second temperature sensor 8 is now arranged in the cavity 4 in contact with the inner wall 3.This allows good heat transfer between the valve arrangement and the second temperature sensor 8.

The given embodiments of the invention to which the invention is however not limited therefore allow to perform a method for monitoring temperatures with a control means 1 for the valve arrangement, the valve arrangement comprising the valve for a heater radiator. The method comprises the steps of measuring the first temperature with the first temperature sensor 7 of the control means 1, the first temperature sensor 7 having the first distance with respect to the valve coupling zone 2 of the control means 1, measuring the second temperature with the second temperature sensor 8 of the control means 1, the second temperature sensor 8 having the second distance with respect to the valve coupling zone 2, the second distance being different from the first distance and measuring the third temperature with the third temperature sensor 9 of the control means 1, the third temperature sensor 9 having the third distance with respect to the valve coupling zone 2, the third distance being different from the first distance and from the second distance. This allows performing one or more calculations on the basis of the third temperature and at least one of the first temperature and the second temperature. Most specifically, it becomes possible to estimate the ambient temperature of the valve arrangement by performing the calculation on the basis of the first temperature and the third temperature, the first temperature sensor 7 being arranged distant from the valve coupling zone 2 of the control means 1 and the third temperature sensor 9 being arranged to detect an intermediate temperature of the control means 1 and estimating the fluid temperature of the fluid located inside the valve arrangement by performing the calculation on the basis of the second temperature and the third temperature, the second temperature sensor 8 being arranged adjacent to the valve coupling zone 2 of the control means 1 and the third temperature sensor 9 being arranged to detect the intermediate temperature of the control means 1. Specifically, extrapolation between the first temperature and the third temperature allows to estimate the ambient temperature. Accordingly, extrapolating between the second temperature and the third temperature allows to estimate the valve temperature or liquid temperature.

As comes clear from the above, the purpose of the second temperature sensor 8 is to detect when warm liquid, for example water, reaches the valve of the valve arrangement and to calculate the valve temperature or liquid temperature. It can be important to detect when warm water reaches the valve with high accuracy and very low margin of fail since this information may be used to know spindle position of the valve arrangement in which the valve is open. As shown above, this may be done by comparing the second temperature and the third temperature. By looking at the temperature difference, the gradient change and the response time difference between the second temperature sensor 8 and the third temperature sensor 9, it is possible to detect a temperature increase in the valve with good precision. Furthermore, knowing the valve temperature on the supply side of the heat emitter (for example the heat radiator) can be an initiator for energy consumption calculation while knowing the valve temperature on the return side of the heat emitter can be a mean of balancing, return temperature limitation and return temperature control. Comparing the second temperature and the third temperature may not be as fast and as dynamic as a warm water detection but should be understood more like a long term extrapolation between the second temperature sensor and the third temperature sensor which may be dependent on distance and materials between the second temperature sensor 8 and the third temperature sensor 9.

Furthermore, knowing the valve temperature or liquid temperature with higher accuracy allows for controller gain adaption to water temperature to normalize an actuator gain, detecting a switched off boiler, allowing to control a motor and internal power consumption accordingly and/or detecting whether the control means 1, in the present case a thermostat head, is mounted on the return or a supply pipe by performing a step on the valve position and measuring the delay until a heat front arrives. This allows optimizing the control method.

On the other hand, it becomes clear in view of the above that the purpose of the first temperature sensor 7 is together with the third temperature sensor 9 to calculate a representative room or ambient temperature by extrapolation between the first temperature sensor 7 and the third temperature sensor 9. Therefore, the purpose of the third temperature sensor 9 is to create a good stable reference of the average temperature of the control means 1, in this case the thermostat head. This allows to come to good estimates of the room temperature and the water temperature.

Lastly, although not shown, it is obvious that an embodiment of the invention is the valve arrangement comprising a valve and the control means 1.

## Claims

1. A control means (1) for a valve arrangement, the control means (1) comprising a valve coupling zone (2), a first temperature sensor (7) having a first distance with respect to the valve coupling zone (2), and a second temperature sensor (8) having a second distance with respect to the valve coupling zone (2), the second distance being different from the first distance,
**characterized by**
a third temperature sensor (9), the third temperature sensor (9) having a third distance with respect to the valve coupling zone (2), the third distance being different from the first distance and from the second distance, wherein the third temperature sensor (9) is arranged to measure an intermediate temperature.

2. The control means according to claim 1 **characterized in that** the third temperature sensor (9) is arranged in between the first temperature sensor (7) and the second temperature sensor (8).

3. The control means according to claim 1 or 2, **characterized in that** the third temperature sensor (9) is arranged equidistant from the first temperature sensor (7) and the second temperature sensor (8).

4. The control means according to any of the claims 1 to 3, **characterized in that** the third temperature sensor (9) is arranged on a support element (12).

5. The control means according to claim 4, **characterized in that** the support element (12) is a PCB of the control means (1).

6. The control means according to claim 4 or 5, **characterized in that** the support element (12) is a PCB of a display (14) of the control means (1).

7. The control means according to any of the claims 1 to 6, **characterized in that** the first temperature sensor (7) is arranged distant from the valve coupling zone (2) in an opening (10) of the control means (1) and/or offset from a rotational axis of a handle (11) of the control means (1).

8. The control means according to claim 7, **characterized in that** the first temperature sensor (7) is arranged at an end of the control means (1) being distant from the valve coupling zone (2).

9. The control means according to any of the claims 1 to 8, **characterized in that** the second temperature sensor (8) is arranged at a control means socket and/or in a cavity (4) at a bottom of the control means (1).

10. The control means according to any of the claims 1 to 9, **characterized in that** the control means (1) comprises a processing unit being adapted to perform a calculation on the basis of measured temperature data obtained by two or more of the first temperature sensor (7), the second temperature sensor (8) and the third temperature sensor (9), at least one of the measured temperature data being obtained by the third temperature sensor (9), the calculation preferably resulting in one or more of the elements of the group consisting of a temperature difference, a temperature gradient change and a temperature response time difference.

11. The control means according to any of the claims 1 to 10, **characterized in that** the control means (1) is a thermostat head,

12. A valve arrangement with a control means (1) according to any of the claims 1 to 11.

13. A method for monitoring temperatures with a control means (1) for a valve arrangement, the valve arrangement comprising a valve for a heater radiator, the method comprising the steps:
- Measuring a first temperature with a first temperature sensor (7) of the control means (1), the first temperature sensor (7) having a first distance with respect to a valve coupling zone (2) of the control means (1);
- Measuring a second temperature with a second temperature sensor (8) of the control means (1), the second temperature sensor (8) having a second distance with respect to the valve coupling zone (2), the second distance being different from the first distance;
the method being **characterized by** the step:
- Measuring a third temperature with a third temperature sensor (9) of the control means (1), the third temperature sensor (9) having a third distance with respect to the valve coupling zone (2), the third distance being different from the first distance and from the second distance, the third temperature being an intermediate temperature.

14. The method according to claim 13, **characterized by** the step of:
- performing at least one calculation on the basis of the third temperature and at least one of the first temperature and the second temperature.

15. The method according to claim 15, **characterized by** the steps:
- estimating an ambient temperature of the valve arrangement by performing the calculation on the basis of the first temperature and the third temperature, the first temperature sensor (7) being arranged distant from the valve coupling zone (2) of the control means (1) and the third temperature sensor (9) being arranged to detect an intermediate temperature of the control means (1); and/or
- estimating a fluid temperature of a fluid located inside the valve arrangement by performing the calculation on the basis of the second temperature and the third temperature, the second temperature sensor (8) being arranged adjacent to the valve coupling zone (2) of the control means (1) and the third temperature sensor (9) being arranged to detect the intermediate temperature of the control means (1).

## Patentansprüche

1. Steuervorrichtung (1) für eine Ventilanordnung, wobei die Steuervorrichtung (1) eine Ventilkupplungszone (2), einen ersten Temperatursensor (7) mit einem ersten Abstand in Bezug auf die Ventilkupplungszone (2) und einen zweiten Temperatursensor (8) mit einem zweiten Abstand in Bezug auf die Ventilkupplungszone (2) aufweist, wobei der zweite Abstand sich von dem ersten Abstand unterscheidet, **gekennzeichnet durch** einen dritten Temperatursensor (9), wobei der dritte Temperatursensor (9) einen dritten Abstand in Bezug auf die Ventilkupplungszone (2) aufweist, wobei sich der dritte Abstand von dem ersten Abstand und von dem zweiten Abstand unterscheidet, wobei der dritte Temperatursensor (9) angeordnet ist, um eine Zwischentemperatur zu messen.

2. Steuervorrichtung nach Anspruch 1, **dadurch gekennzeichnet, dass** der dritte Temperatursensor (9) zwischen dem ersten Temperatursensor (7) und dem zweiten Temperatursensor (8) angeordnet ist.

3. Steuervorrichtung nach Anspruch 1 oder 2, **dadurch gekennzeichnet, dass** der dritte Temperatursensor (9) mit gleichem Abstand von dem ersten Temperatursensor (7) und dem zweiten Temperatursensor (8) angeordnet ist.

4. Steuervorrichtung nach einem der Ansprüche 1 bis 3, **dadurch gekennzeichnet, dass** der dritte Temperatursensor (9) auf einem Trägerelement (12) angeordnet ist.

5. Steuervorrichtung nach Anspruch 4, **dadurch gekennzeichnet, dass** das Trägerelement (12) eine Leiterplatte der Steuervorrichtung (1) ist.

6. Steuervorrichtung nach Anspruch 4 oder 5, **dadurch gekennzeichnet, dass** das Trägerelement (12) eine Leiterplatte einer Anzeige (14) der Steuervorrichtung (1) ist.

7. Steuervorrichtung nach einem der Ansprüche 1 bis 6, **dadurch gekennzeichnet, dass** der erste Temperatursensor (7) entfernt von der Ventilkupplungszone (2) in einer Öffnung (10) der Steuervorrichtung (1) und/oder versetzt von einer Drehachse eines Handgriffs (11) der Steuervorrichtung (1) angeordnet ist.

8. Steuervorrichtung nach Anspruch 7, **dadurch gekennzeichnet, dass** der erste Temperatursensor (7) an einem von der Ventilkupplungszone (9) entfernten Ende der Steuervorrichtung (1) angeordnet ist.

9. Steuervorrichtung nach einem der Ansprüche 1 bis 8, **dadurch gekennzeichnet, dass** der zweite Temperatursensor (8) an einem Steuervorrichtungssockel und/oder in einem Hohlraum (4) an einem Boden der Steuervorrichtung (1) angeordnet ist.

10. Steuervorrichtung nach einem der Ansprüche 1 bis 9, **dadurch gekennzeichnet, dass** die Steuervorrichtung (1) eine Verarbeitungseinheit aufweist, die so ausgelegt ist, dass sie eine Berechnung auf der Basis von gemessenen Temperaturdaten durchführt, die von zwei oder mehreren des erste Temperatursensors (2), des zweiten Temperatursensors (8) und des dritten Temperatursensors (9) erhalten werden, wobei mindestens einer der gemessenen Temperaturdaten von dem dritten Temperatursensor (9) erhalten wird, wobei die Berechnung vorzugsweise dazu führt, dass eines oder mehrere der Elemente der Gruppe aus einer Temperaturdifferenz, einer Temperaturgradientenänderung und einer Temperaturansprechzeitdifferenz bestehen.

11. Steuervorrichtung nach einem der Ansprüche 1 bis 10, **dadurch gekennzeichnet, dass** die Steuervorrichtung (1) ein Thermostatkopf ist.

12. Ventilanordnung mit einer Steuervorrichtung (1) nach einem der Ansprüche 1 bis 11.

13. Verfahren zum Überwachen von Temperaturen mit einer Steuervorrichtung (1) für eine Ventilanordnung, wobei die Ventilanordnung ein Ventil für einen Heizradiator aufweist, wobei das Verfahren die Schritte aufweist:
- Messen einer ersten Temperatur mit einem ersten Temperatursensor der Steuervorrichtung (1), wobei der erste Temperatursensor (7) einen ersten Abstand in Bezug auf eine Ventilkupplungszone (2) der Steuervorrichtung (1) aufweist;
- Messen einer zweiten Temperatur mit einem zweiten Temperatursensor (8) der Steuervorrichtung (1), wobei der zweite Temperatursensor (8) einen zweiten Abstand in Bezug auf die Ventilkupplungszone (2) aufweist, wobei der zweite Abstand von dem ersten Abstand verschieden ist;
- wobei das Verfahren durch den Schritt gekennzeichnet ist:
- Messen einer dritten Temperatur mit einem dritten Temperatursensor der Steuervorrichtung (1), wobei der dritte Temperatursensor (9) einen dritten Abstand in Bezug auf die Ventilkupplungszone (2) aufweist, wobei der dritte Abstand vom ersten Abstand und vom zweiten Abstand verschieden ist, wobei die dritte Temperatur eine Zwischentemperatur ist.

14. Verfahren nach Anspruch 13, **gekennzeichnet durch** den folgenden Schritt:
- Durchführen mindestens einer Berechnung auf der Grundlage der dritten Temperatur und mindestens einer der ersten Temperatur und der zweiten Temperatur.

15. Verfahren nach Anspruch 15, **gekennzeichnet durch** die Schritte:
- Abschätzen einer Umgehungstemperatur der Ventilanordnung durch Ausführen der Berechnung auf der Grundlage der ersten Temperatur und der dritten Temperatur, wobei der erste Temperatursensor (7) entfernt von der Ventilkupplungszone (2) der Steuervorrichtung (1) angeordnet ist und der dritte Temperatursensor (9) angeordnet ist, um eine Zwischentemperatur der Steuervorrichtung (1) zu erfassen; und/oder
- Abschätzen einer Fluidtemperatur eines Fluids, das sich innerhalb der Ventilanordnung befindet, durch Ausführung der Berechnung auf der Grundlage der zweiten Temperatur und der dritten Temperatur, wobei der zweite Temperatursensor (8) angrenzend an die Ventilkupplungszone (2) der Steuervorrichtung (1) angeordnet ist und der dritte Temperatursensor (9) angeordnet ist, um die Zwischentemperatur der Steuervorrichtung (1) zu erfassen.

## Revendications

1. Moyen de commande (1) pour un agencement de soupape, le moyen de commande (1) comprenant une zone de couplage de soupape (2), un premier capteur de température (7) ayant une première distance par rapport à la zone de couplage de soupape (2), et un deuxième capteur de température (8) ayant une seconde distance par rapport à la zone de couplage de soupape (2), la seconde distance étant différente de la première distance,
**caractérisé par**
un troisième capteur de température (9), le troisième capteur de température (9) ayant une troisième distance par rapport à la zone de couplage de soupape (2), la troisième distance étant différente de la première distance et de la seconde distance, dans lequel le troisième capteur de température (9) est agencé pour mesurer une température intermédiaire.

2. Moyen de commande selon la revendication 1, **caractérisé en ce que** le troisième capteur de température (9) est agencé entre le premier capteur de température (7) et le deuxième capteur de température (8).

3. Moyen de commande selon la revendication 1 ou 2, **caractérisé en ce que** le troisième capteur de température (9) est agencé à équidistance du premier capteur de température (7) et du deuxième capteur de température (8).

4. Moyen de commande selon l'une quelconque des revendications 1 à 3, **caractérisé en ce que** le troisième capteur de température (9) est agencé sur un élément de support (12).

5. Moyen de commande selon la revendication 4, **caractérisé en ce que** l'élément de support (12) est une carte de circuit imprimé du moyen de commande (1).

6. Moyen de commande selon la revendication 4 ou 5, **caractérisé en ce que** l'élément de support (12) est une carte de circuit imprimé d'un affichage (14) du moyen de commande (1).

7. Moyen de commande selon l'une quelconque des revendications 1 à 6, **caractérisé en ce que** le premier capteur de température (7) est agencé à distance de la zone de couplage de soupape (2) dans une ouverture (10) du moyen de commande (1) et/ou décalé d'un axe de rotation d'une poignée (11) du moyen de commande (1).

8. Moyen de commande selon la revendication 7, **caractérisé en ce que** le premier capteur de température (7) est agencé à une extrémité du moyen de commande (1) étant à distance de la zone de couplage de soupape (2).

9. Moyen de commande selon l'une quelconque des revendications 1 à 8, **caractérisé en ce que** le deuxième capteur de température (8) est agencé sur une douille de moyen de commande et/ou dans une cavité (4) sur un fond du moyen de commande (1).

10. Moyen de commande selon l'une quelconque des revendications 1 à 9, **caractérisé en ce que** le moyen de commande (1) comprend une unité de traitement étant adaptée pour exécuter un calcul en se basant sur des données de température mesurées obtenues par deux ou plus du premier capteur de température (7), du deuxième capteur de température (8) et du troisième capteur de température (9), au moins une des données de température mesurées étant obtenue par le troisième capteur de température (9), le calcul résultant de préférence en un ou plusieurs des éléments du groupe consistant en une différence de température, un changement de gradient de température et une différence de temps de réponse de température.

11. Moyen de commande selon l'une quelconque des revendications 1 à 10, **caractérisé en ce que** le moyen de commande (1) est une tête de thermostat.

12. Agencement de soupape présentant un moyen de commande (1) selon l'une quelconque des revendications 1 à 11.

13. Procédé pour surveiller des températures comprenant un moyen de commande (1) pour un agencement de soupape, l'agencement de soupape comprenant une soupape pour un radiateur d'appareil de chauffage, le procédé comprenant les étapes :
- de mesure d'une première température avec un premier capteur de température (7) du moyen de commande (1), le premier capteur de température (7) ayant une première distance par rapport à une zone de couplage de soupape (2) du moyen de commande (1) ;
- de mesure d'une deuxième température avec un deuxième capteur de température (8) du moyen de commande (1), le deuxième capteur de température (8) ayant une deuxième distance par rapport à la zone de couplage de soupape (2), la deuxième distance étant différente de la première distance ;
le procédé étant **caractérisé par** l'étape :
- de mesurer une troisième température avec un troisième capteur de température (9) du moyen de commande (1), le troisième capteur de température (9) ayant une troisième distance par rapport à la zone de couplage de soupape (2), la troisième distance étant différente de la première distance et de la deuxième distance, la troisième température étant une température intermédiaire.

14. Procédé selon la revendication 13, **caractérisé par** l'étape :
- de réaliser au moins un calcul en se basant sur la troisième température et au moins une de la première température et de la deuxième température.

15. Procédé selon la revendication 14, **caractérisé par** les étapes :
- d'estimer une température ambiante de l'agencement de soupape en exécutant le calcul en se basant sur la première température et la troisième température, le premier capteur de température (7) étant agencé à distance de la zone de couplage de soupape (2) du moyen de commande (1) et le troisième capteur de température (9) étant agencé pour détecter une température intermédiaire du moyen de commande (1) ; et/ou
- d'estimer une température de fluide d'un fluide situé à l'intérieur de l'agencement de soupape en exécutant le calcul en se basant sur la deuxième température et la troisième température, le deuxième capteur de température (8) étant agencé adjacent à la zone de couplage de soupape (2) du moyen de commande (1) et le troisième capteur de température (9) étant agencé pour détecter la température intermédiaire du moyen de commande (1) .
